Europäisches Patentamt

(19) **European Patent Office**

**Office européen des brevets**

(11) Publication number: **0 232 688**
**A1**

# (12) EUROPEAN PATENT APPLICATION

(21) Application number: **86830390.0**

(22) Date of filing: **29.12.86**

(51) Int. Cl.⁴: **B 01 D 45/06,** B 01 D 45/08

(30) Priority: **09.01.86 IT 5282786**

(43) Date of publication of application: **19.08.87**
**Bulletin 87/34**

(84) Designated Contracting States: **AT BE CH DE ES FR GB GR IT LI LU NL SE**

(71) Applicant: **L.C.M. LAVORAZIONE COMPONENTI MECCANICHE S.r.L., Via Avogadro 28/30, I-10090 Bruino (Torino) (IT)**

(72) Inventor: **Stantero, Giovanni, Via Gorizia 162, I-10137 Torino (IT)**

(74) Representative: **Bosotti, Luciano, c/o Jacobacci-Casetta & Perani S.p.A. Via Alfieri, 17, I-10121 Torino (IT)**

(54) **A device for separating particles contained in an outlet gas flow particularly for air compressors and the like.**

(57) A device for separating particles entrained by a vented gas flow leaving an aperture (A) in a casing (C) comprises coaxial first (2) and second (3) tubular ducts together defining an annular collecting space (7). The two tubular bodies (2, 3) are connected together by an annular flange (6) which defines an end wall for the annular space (7).

On the end of the first tubular duct (2), is a flow deflector member (13) which can be struck by the gas flow to deflect it towards the annular space (7), whereby particles entrained by the flow are separated from the flow and collect in the annular space (7).

Device  for separating particles entrained by  a  vented
gas flow, particularly for air compressors an the like

The  present invention relates to devices  which  permit
the  separation  of particles entrained by  a  gas  flow
leaving an aperture in a casing.

Devices  of this type, generally known as "vent  plugs",
are  mounted  in   apertures   provided  in  the  casing
(housing) of apparatus such as air compressors,  motors,
etc.,  to allow the discharge (venting) of the  mass  of
pressurised gas within the casing.

The  gas  flow  discharged   to  the  exterior  normally
entrains  particles of liquid lubricant (typically  oil)
which  tend to soil the part of the  casing  surrounding
the aperture in which the vent plug is mounted.

In addition to soiling the casing, the mass of particles
entrained  by  the   gas   discharged  to  the  exterior
corresponds  to a mass of product which is lost and  may
also  have a harmful effect on the economics of  use  of
the apparatus.

The  object  of the present invention is  to  provide  a
device  of the type specified above, which  is  improved
in  terms of efficiency and practicality of  application
and use, particularly with regard to the possibility  of
separating and  collecting the particles  entrained  in
the  gas  flow.   Thus,   in   order  to  prevent  these
particles  from   soiling the casing  of  the  apparatus
from  which the gas  flows, it  is  also  possible  to
collect these particles for their possible reuse.

- 2 -

According to the present invention, this object is achieved by a device for separating particles entrained by a gas flow leaving an aperture in a casing, characterised in that it comprises:

- a first tubular duct having a first end and a second end intended to be aligned with the aperture in use, whereby the air flow passes through the first tubular duct from the second end to the first end,

- a second tubular duct surrounding at least the first end of the first tubular duct and defining an annular space between the first and second tubular ducts, the first and second tubular ducts being connected together by an annular flange defining an end wall of the annular space, and

- a flow deflector member provided on the first end of the first tubular duct so that it can be struck by the gas flow to deflect the flow towards the annular space, whereby the particles entrained by the flow are separated from the flow and collect in the annular space.

Further characteristics and advantages of the invention will become apparent from the description which follows, purely by way of non-limiting example, with reference to the appended drawings, in which:

Figure 1 is a side elevational view of a device according to the invention, illustrated in a typical configuration of use,

Figure 2 is a section taken on the line II-II of Figure 1,

Figure 3 is a section taken on the line III-III of Figure 1, on an enlarged scale,

Figure 4 is another section taken on the line IV-IV of Figure 2, on an enlarged scale, and

Figures 5 and 6 illustrate further developments of the device of the invention.

In the drawings, a device which enables the separation and collection of particles entrained by a gas flow leaving an aperture A in a casing (housing) C of an air compressor, a motor or like apparatus, not illustrated in its entirety, is generally indicated 1.

In other words, the device under consideration is to be used as a " vent plug" to allow the mass of pressurised gas within the casing to be exhausted to the exterior of the casing C.

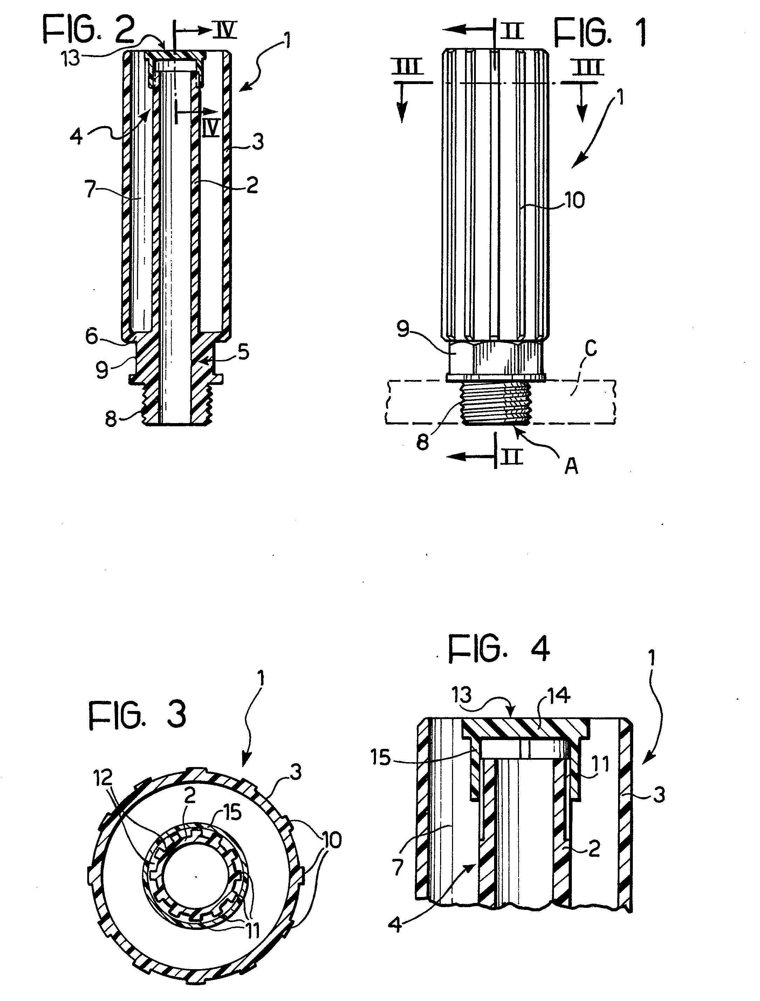

As best seen in the sectional view of Figure 2, the device 1 is constituted essentially by first and second tubular bodies, indicated 2 and 3 respectively, which are coaxial and coextensive with each other.

The first (inner) tubular body 2 can be seen to have a first end 4 and a second end 5.

An annular flange 6 extends from the first tubular body 2 towards the second (outer) tubular body 3 in correspondence with the second end 5 so as to connect the two tubular bodies 2, 3 together. The flange 6 thus defines an end wall of the annular space, indicated 7, between the two tubular bodies 2 and 3.

In practice, the tubular bodies 2 and 3 are parts of a

- 4 -

0232688

single piece of moulded plastics material, cast light alloy or other like material.

The second end 5 of the first tubular body 2 has threading 8 or equivalent coupling or engagement means on its apex part, for allowing the device 1 to be fitted into the aperture A as illustrated schematically in Figure 1.

Intermediate the apex part 8 and the flange 6, the second end 5 of the first tubular body 2 has a prismatic core 9, preferably of hexagonal section, constituting a head for engagement by a spanner or like tool which can be used to screw the device 1 into (and unscrew it from) the aperture A.

Naturally, the device 1 may also be screwed into or unscrewed from the aperture A manually.

In order to facilitate gripping of the device 1 during fitting or removal, the outer wall of the second tubular body 3 has ribs or like longitudinal axial relief 10 for facilitating the gripping of the outer surface of the device 1.

The ribs 10 also have the function of stiffening the wall of the second tubular body 3.

A similar series of ribs or longitudinal axial relief 11 is provided on the outer surface of the first tubular body 2, at least at its first end 4.

As best seen in the section of Figure 3, the ribs or relief 11 together define arcuate spaces, indicated 12.

An insert fitted like a stopper to the first end 4 of the first tubular body 2 is generally indicated 13.

The insert 13 constitutes a flow deflector member including an end wall 14 which extends transverse the tubular body 2 in correspondence with the first end 4 and a peripheral wall 15 which surrounds the top part of the first end 4 of the first tubular body 2.

Due to the presence of the arcuate spaces 12 defined by the ribs 11, however, the insert 13 does not completely occlude the axial cavity in the first tubular body. The spaces 12 actually enable gas flowing through the axial cavity in the first tubular body 2 to pass into the annular space 7 between the two tubular bodies 2 and 3. During its passage from the axial cavity in the first tubular body 2 to the annular space 7, however, this flow is first directed radially (relative to the tubular bodies 2,3) and subsequently deflected into the annular space 7 with a reversal of its flow direction.

In the arrangement of use, which is illustrated in Figure 1, the device 1 is mounted in the casing (housing) C of apparatus such as an air compressor or motor, the end 5 being inserted into the aperture A provided in the casing C.

The vented flow of pressurised gas, which leaves through the aperture A and entrains particles such as particles of lubricant, passes through the axial cavity in the first tubular body 2 and then reaches the deflector member 13.

As described previously, the deflector member 13 causes a reversal of the direction of flow of the gas which is projected into the annular space 7.

As a result of this sharp reversal, the particles entrained by the air flow are deposited on the walls of the device 1 and, in particular, on the facing outer and inner walls of the tubular body 2 and the tubular body 3.

The gas from which the particles have been separated as a result of the sharp reversal of the flow direction, however, can flow freely out of the device 1 through the annular aperture defined by the periphery of the deflector member 13 and the end edge of the second tubular body 3 facing it.

The particles separated from the gas collect within the annular space 7.

Preferably, the device 1 is mounted substantially vertically with the threaded end 8 facing downwardly. The particles which collect in the annular space 7 thus tend to fall under gravity towards the flange 6 constituting the end wall of the annular space 7.

This space thus constitutes a sort of cup in which the particles separated from the vented gas flow gradually collect.

When this cup is full, the particles collected may be removed.

The location of the flange 6 close to the second end 5 of the tubular body 2 maximises the volume available for the collection of the particles separated from the gas flow for given overall dimensions of the device 1.

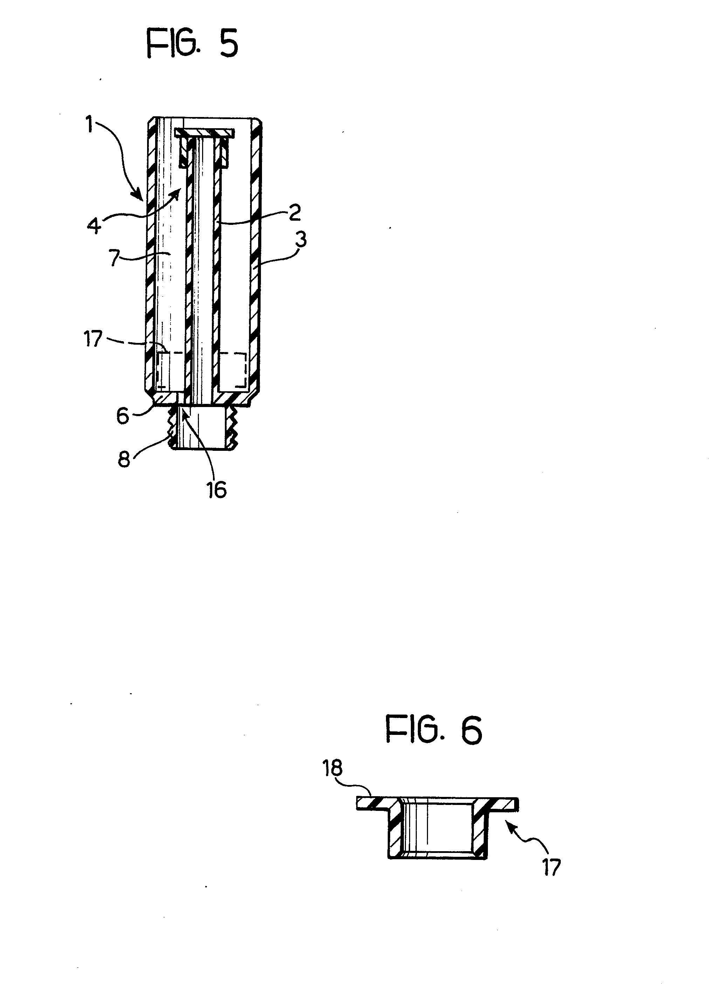

Figure 5 is an axial section corresponding substantially to Figure 2, in which several possible variants of the device of the invention are illustrated. It must be specified, however, that these variants may be introduced separately from each other into the device of Figure 1.

More precisely, in the embodiment of Figure 5, the prismatic core 9 has been eliminated, while one or more apertures 16 have been provided in the second end 5 to put the annular space 7 into communication with the cavity within the threaded end 8, which may possibly be enlarged to make the manufacture of the device 1 easier. The aperture 16 is intended to allow the mass which has collected within the annular space 7 to flow back into the casing C, thus enabling its complete recovery.

In order to prevent the aperture 16 from being a direct uncontrolled flow path for the vented gases to the exterior of the casing C, a shaped body 17, illustrated in greater detail in the section of Figure 6, may be fitted on the tubular body 2 with minimal sliding clearance, in the position illustrated schematically in broken outline in Figure 5.

The body 17 constitutes a sort of diaphragm with an annular flange 18 facing the aperture 16 which is struck directly by any possible flow from the aperture 16 itself. Thus, the particles entrained by this flow are, so to speak, trapped beneath the flange 18, which acts as a screen, and can flow back into the casing C

- 8 -

through the aperture 16 when the apparatus on which the device 1 is mounted is stopped.

The outer radial dimensions of the flange 18 of the body 17 are chosen to be slightly less than the inner radial dimensions of the outer tubular body 3. Thus, the body 17 does not obstruct to any extent the normal flow of the mass collected within the annular space 7, according to the principle of operation described above, back towards the lower end 5 and the aperture 16.

Naturally, the scope of the present invention also extends to models which enable equal utility to be achieved by means of the same innovative concept and, in particular, to devices in which the flow deflector member 13 is an integral part of the first tubular duct 2, instead of being an insert mounted on the free end of the first tubular duct 2. The formation of the deflector member 13 in the form of an insert, however, is more advantageous with regard the manufacture of the device 1 by a moulding operation and with regard to the possibility of periodic cleaning of the device itself.

- 9 -

## CLAIMS

1. A device for separating particles entrained in a vented gas flow leaving an aperture (A) in a casing (C), characterised in that it comprises:
- a first tubular duct (2) having a first end (4) and a second end (5) intended to be aligned with the aperture (A) in use, whereby the air flow passes through the first tubular duct (2) from the second end (5) to the first end (4),
- a second tubular duct (3) surrounding at least the first end (4) of the first tubular duct (2) and defining an annular space (7) between the first (2) and second (3) tubular ducts, the first (2) and second (3) tubular ducts being connected together by an annular flange (6) defining an end wall of the annular space (7), and
- a flow deflector member (3) provided on the first end (4) of the first tubular duct (2) so that it can be struck by the gas flow to deflect the flow towards the annular space (7), whereby the particles entrained by the flow are separated from the flow and collect in the annular space (7).

2. A device according to Claim 1, characterised in that the deflector member (13) is constituted essentially by an insert mounted on the first end (4) of the first tubular duct (2).

3. Device according to Claim 1 or Claim 2, characterised in that the annular flange (6) is located close to the second end (5) of the first tubular duct (2).

4. A device according to any one of Claims 1 to 3, characterised in that there are provided close to the second end (5) of the first tubular body (2) a threaded part (8) for allowing the device (1) to be screwed into the aperture, and a prismatic part (9) for facilitating the rotation of the device (1) during its screwing into the aperture (A).

5. A device according to any one of the preceding claims, characterised in that the first tubular body (2) has on its outer wall, at least in correspondence with the first end (4), radial ribs (11) together defining arcuate volumes (12) for the passage of the gas whose flow is deflected towards the annular space (7).

6. A device according to Claim 1, characterised in that the first tubular duct (2) has at least one aperture (16) in correspondence with the annular flange (6) for putting the first tubular duct (2) into communication with the annular space (7), the at least one aperture (16) being able to allow particles collected in the annular space (7) to flow back into the aperture (A) of the casing (C).

7. A device according to Claim 6, characterised in that a further flow deflector member (17) is provided around the first tubular duct (2) adjacent the annular flange (6) in a position facing the at least one aperture (16), for preventing the at least one aperture (16) from being able to constitute an uncontrolled path for the flow of gas from the aperture (A) of the casing (C).

1/2

0232688

FIG. 2

FIG. 1

FIG. 3

FIG. 4

# FIG. 5

# FIG. 6

# EUROPEAN SEARCH REPORT

**European Patent Office**

0232688
Application number

EP 86 83 0390

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-1 544 126 (SOCIETE ALSACIENNE DE CONSTRUCTIONS ATOMIQUES) * Claims 1,2; pages 1-3; figures 1,3,6 * | 1,2 | B 01 D 45/06<br>B 01 D 45/08 |
| A | EP-A-0 162 441 (STEIN INDUSTRIES) * Claims 1,5; figure 5 * | 1,2 | |
| A | GB-A-1 505 293 (METALLWERK BIEBIGHAUSER) | | |

**TECHNICAL FIELDS SEARCHED (Int. Cl.4)**

B 01 D 45/00

The present search report has been drawn up for all claims

| Place of search | Date of completion of the search | Examiner |
|---|---|---|
| THE HAGUE | 11-05-1987 | POLESAK, H.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82